# EUROPEAN PATENT APPLICATION

(11) **EP 4 838 674 A1**
(43) Date of publication of application: **11.11.2026**
(21) Application number: 26177052.3
(22) Date of filing: 06.05.2026
(51) Int. Cl.: H01M 50/489, H01M 4/38, H01M 4/134, H01M 10/42, H01M 10/052, H01M 10/0585, H01M 50/46, H01M 50/474, H01M 50/477, H01M 50/486

(54) **ELECTRODE ASSEMBLY FOR SECONDARY BATTERY, AND SECONDARY BATTERY COMPRISING THE SAME**

(30) Priority: 07.05.2025 KR 20250059020
(71) Applicant: SK On Co., Ltd., Seoul 03161 (KR)
(72) Inventor: PARK, Seong Jin, 34124 Daejeon (KR); JEON, Hae Ryong, 34124 Daejeon (KR); KONG, Sung Ho, 34124 Daejeon (KR); KIM, Youn Young, 34124 Daejeon (KR); CHOI, Jae Hoon, 34124 Daejeon (KR); HWANG, Hye Su, 34124 Daejeon (KR)
(74) Representative: Prüfer & Partner mbB Patentanwälte · Rechtsanwälte

(57) **Abstract**

The present disclosure relates to an electrode assembly for a secondary battery and a secondary battery including the same, wherein the electrode assembly for a secondary battery according to an aspect may include: one or more positive electrodes; one or more negative electrodes; a plurality of separators; and a coating line formed along an edge on at least one side of at least some of the plurality of separators, wherein the positive electrode and the negative electrode may be alternately stacked along a first direction, wherein any one of the plurality of separators may be interposed between the positive electrode and the negative electrode, and wherein the negative electrode and the coating line may come in contact.

## Description

### BACKGROUND OF THE INVENTION

### 1. Field

The present disclosure relates to an electrode assembly for a secondary battery and a secondary battery including the same.

### 2. Description of the Related Art

A lithium metal negative electrode is a negative electrode material having a low electrochemical reduction potential and a high capacity per unit weight of 3,860 mAh/g, and a battery including the lithium metal negative electrode is capable of significantly improving the energy density per unit weight/volume compared to a conventional lithium secondary battery that uses a graphite negative electrode, and is attracting attention as a negative electrode for next-generation lithium secondary batteries.

However, the lithium metal negative electrode is prone to side reactions with an electrolyte due to the high reactivity of lithium metal itself. In addition, when uneven electrodeposition takes place due to imbalanced current concentration during the charging and discharging process, resinous dendrites may be formed and grown on the surface of the negative electrode. This may lead to a deterioration in the capacity and life span of the secondary battery, and in particular, when the dendrite grows excessively and penetrates a separator, it may cause a short circuit between a positive electrode and a negative electrode, which may pose a fatal risk.

### SUMMARY OF THE INVENTION

According to an aspect of the present disclosure, an electrode assembly may be provided, capable of preventing uneven electrodeposition of lithium ions during charge and discharge and suppressing formation and growth of dendrites.

According to another aspect of the present disclosure, a secondary battery with improved life span and safety may be provided.

The present disclosure may be widely applied to in the fields of electric vehicles, battery charging stations, energy storage systems (ESS), and other green technologies such as photovoltaics and wind power that utilize batteries. The present disclosure may also be used in eco-friendly mobility, including electric vehicles and hybrid vehicles, to prevent climate change by curbing air pollution and greenhouse gas emissions.

An electrode assembly for a secondary battery according to the present disclosure may include: one or more positive electrodes; one or more negative electrodes; a plurality of separators; and a coating line formed along an edge on at least one side of at least some of the plurality of separators, wherein the positive electrode and the negative electrode may be alternately stacked along a first direction, wherein any one of the plurality of separators may be interposed between the positive electrode and the negative electrode, and wherein the negative electrode and the coating line may come in contact.

In the electrode assembly for a secondary battery according to an embodiment, the coating line may have an insulating property.

In the electrode assembly for a secondary battery according to an embodiment, the coating line may have an electrolyte swelling degree of 20% or less.

In the electrode assembly for a secondary battery according to an embodiment, the coating line may have the adhesiveness.

In the electrode assembly for a secondary battery according to an embodiment, the coating line may include at least any one selected from the group consisting of polypropylene, polyethylene, polyethylene terephthalate, polyimide, polypropylene-polyethylene-polypropylene (PP/PE/PP) materials, polyvinylidene fluoride (PVdF), polyvinyl chloride (PVC), and polysulfone (PSU).

In the electrode assembly for a secondary battery according to an embodiment, the negative electrode may include a lithium metal negative electrode.

In the electrode assembly for a secondary battery according to an embodiment, the negative electrode may include a negative electrode coated portion on which a negative electrode active material layer is formed on a negative electrode collector and a negative electrode uncoated portion formed on an outer side of the negative electrode coated portion, wherein the negative electrode coated portion may include a first region located along an edge of the negative electrode coated portion and coming in contact with the coating line and a second region located on an inner side of the first region.

In the electrode assembly for a secondary battery according to an embodiment, the positive electrode may include a positive electrode coated portion on which a positive electrode active material layer is formed on a positive electrode collector and a positive electrode uncoated portion formed on an outer side of the positive electrode coated portion, wherein an area of the positive electrode coated portion may be smaller than an area of the negative electrode coated portion.

In the electrode assembly for a secondary battery according to an embodiment, the coating line may include a first coating line and a second coating line, wherein the first coating line may extend in a direction parallel to a second direction intersecting the first direction, wherein the second coating line may extend in a direction parallel to a third direction intersecting the first direction, and wherein the second direction and third direction may intersect each other.

In the electrode assembly for a secondary battery according to an embodiment, the first coating line may be formed in pairs spaced apart in the third direction, and the second coating lines may be formed in pairs spaced apart in the second direction.

In the electrode assembly for a secondary battery according to an embodiment, at least a portion of the first region may be in contact with the coating line along the first direction.

In the electrode assembly for a secondary battery according to an embodiment, at least a portion of the first region may be in contact with the coating line along a second direction or a third direction.

In the electrode assembly for a secondary battery according to an embodiment, a thickness of the coating line may be greater than or equal to a thickness of the negative electrode coated portion.

In the electrode assembly for a secondary battery according to an embodiment, when the electrode assembly for a secondary battery is viewed orthogonally in an imaginary plane perpendicular to the first direction, the first region and the positive electrode coated portion may not overlap each other.

The electrode assembly for a secondary battery according to an embodiment may satisfy Equation 1 below:

$1 < A 2 / Ac \leq 1.2$ Equation 1
wherein, in the Equation 1, A2 represents an area of the second region, and Ac represents an area of the positive electrode coated portion.

In the electrode assembly for a secondary battery according to an embodiment, in the electrode assembly, separators on which the coating line is formed may be arranged successively along the first direction.

In the electrode assembly for a secondary battery according to an embodiment, the separators that are adjacent to each other along the first direction may be arranged so that a surface on which the coating line is formed faces the negative electrode.

In the electrode assembly for a secondary battery according to an embodiment, in the electrode assembly, a separator with the coating line formed and a separator with no coating line formed may be arranged alternately along the first direction.

In the electrode assembly for a secondary battery according to an embodiment, an area of the negative electrode coated portion may be smaller than an area of the separator.

A secondary battery according to the present disclosure may include: the electrode assembly for a secondary battery according to the present disclosure; an exterior member accommodating the electrode assembly for a secondary battery; and an electrolyte accommodated with the electrode assembly within the exterior member.

According to an aspect of the present disclosure, it is possible to provide an electrode assembly capable of preventing uneven electrodeposition of lithium ions during charge and discharge and suppressing formation and growth of dendrites.

According to another aspect of the present disclosure, it is possible to provide a secondary battery with improved life span and safety.

### BRIEF DESCRIPTION OF THE DRAWINGS

Fig. 1 is a diagram to illustrate a state in which a positive electrode, a negative electrode, and a separator are stacked in an electrode assembly according to an embodiment of the present disclosure.
Fig. 2 is a diagram illustrating an example of the separator illustrated in Fig. 1.
Fig. 3 is a diagram illustrating an example of the negative electrode illustrated in Fig. 1.
Fig. 4 is a diagram illustrating an example of the positive electrode illustrated in Fig. 1.
Fig. 5 is a diagram to illustrate the state depicted in Fig. 1 in another aspect.
Fig. 6 is a diagram illustrating an exemplary cross-sectional view of an electrode assembly according to an embodiment of the present disclosure.
Fig. 7 is a diagram to illustrate a state in which a positive electrode, a negative electrode, and a separator are stacked in an electrode assembly according to another embodiment of the present disclosure.
Fig. 8 is a diagram to illustrate the state depicted in Fig. 7 in another aspect.
Fig. 9 is a diagram illustrating an exemplary cross-sectional view of an electrode assembly according to another embodiment of the present disclosure.
Fig. 10 is a diagram to illustrate a state in which a positive electrode, a negative electrode, and a separator are stacked in an electrode assembly according to another embodiment of the present disclosure.
Fig. 11 is a diagram to illustrate the state depicted in Fig. 10 in another aspect.
Fig. 12 is a diagram illustrating exemplary cross-sectional views of an electrode assembly according to another embodiment of the present disclosure.

### DETAILED DESCRIPTION

The embodiments described herein may be modified in many other forms, and therefore the technology according to an embodiment is not limited to the embodiments described herein. Further, throughout the specification, unless otherwise specifically stated, references to "including," "comprising," "containing," or "having" any component are not intended to exclude other components, but rather to indicate that other components may be further included, and are not intended to exclude elements, materials, or processes that are not enumerated further.

As used herein, terms such as equal or uniform may refer to identical or homogenous to each other within acceptable tolerances unless otherwise specified. For example, being equal in any composition or property measurements may mean that two objects being compared are identical within a margin of error, not just exactly the same. On the other hand, having the same physical property measurements may mean that the difference in the measurements between the objects is approximately less than 5%, more specifically less than 3%, and more specifically less than 1%.

As used herein, a state in which an angle formed by two objects is perpendicular, or parallel or perpendicular to each other may include being geometrically perpendicular or parallel, as well as being within a small margin of error.

As used herein, numerical ranges include lower and upper limits and all values within those ranges, increments logically derived from the shape and width of the range being defined, all values that are doubly bounded, and all possible combinations of upper and lower limits of numerical ranges bounded in different ways.

Unless otherwise defined herein, the term "about" may be considered to be a value within 30%, 25%, 20%, 15%, 10%, or 5% of the stated value.

The use of terms such as "first, second, third," or the like preceding the components referred in this specification is intended to avoid confusion as to the components to which they refer, but not intended to indicate any order, importance, or dominant-subordinate relationship among the components. For example, it is also possible to implement an invention including only the second component without the first component.

As used herein, "X-direction," "Y-direction," and "Z-direction" may refer to any of the directions based on a Cartesian coordinate system perpendicular to each other in a three-dimensional space.

As used herein, the phrase "electrically connected" may refer to, without limitation, any method of connection by which a plurality of objects may be connected to be electrically coupled to each other, and may be realized in a variety of ways, including direct connection of the plurality of interconnected objects, or connection mediated by a third object.

As used herein, a configuration defined as a "...part," "...module," or "...unit" may refer to, without limitation, a single component or a set of two or more identical or similar components having common functional aspects, and the set of components may include any non-limiting combination of hardware and/or software.

As used herein, "arranged" may refer to, without limitation, any positional relationship in which one object may be located adjacent to another object. By way of non-limiting example, it may mean coating one object on another object, bonding one object to another object with an adhesive substance, attaching with application of heat, pressure, or the like, or simply positioning or positioning by fixation so that at least a portion of one object comes in contact with at least a portion of another object within any space.

As used herein, the term "secondary battery" may refer to a battery that generates electrical energy by oxidation and reduction reactions when ions, specifically cations such as lithium ions, are inserted and removed from a positive electrode and a negative electrode. More specifically, the term "secondary battery" may refer to any one of a lithium cobalt battery, a lithium high nickel battery, a lithium iron phosphate battery, a lithium ion battery, a lithium polymer battery, a lithium sulfur battery, a nickel hydrogen battery, a nickel cadmium battery, a sodium battery, or an all-solid-state battery. More specifically, as used herein, the term "secondary battery" may refer to, but is not necessarily limited to, a lithium-ion secondary battery.

Hereinafter, the present disclosure will be described in more detail. However, this is illustrative only, and the present disclosure is not limited to the specific embodiments illustrated.

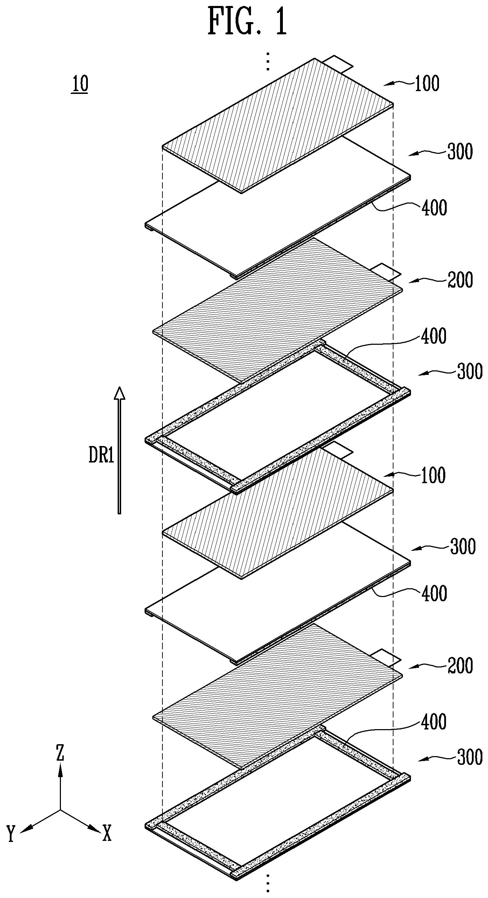

Fig. 1 is a diagram to illustrate a state in which a positive electrode, a negative electrode, and a separator are stacked in an electrode assembly according to an embodiment of the present disclosure.

Referring to Fig. 1 and the diagrams to be described later together, an electrode assembly 10 for a secondary battery according to an aspect of the present disclosure may include: one or more positive electrodes 100; one or more negative electrodes 200; a plurality of separators 300; and a coating line 400 formed along an edge on at least one side of at least some of the plurality of separators 300; wherein the positive electrode 100 and the negative electrode 200 are alternately stacked along a first direction DR1, wherein any one of the plurality of separators 300 is interposed between the positive electrode 100 and the negative electrode 200, and wherein the negative electrode 200 and the coating line 400 may come in contact.

In an embodiment, the electrode assembly 10 may include the positive electrode 100, the negative electrode 200, and the separator 300. In an embodiment, one or more of the positive electrodes 100 and negative electrodes 200 may be provided, and a plurality of separators 300 may be provided. In an exemplary embodiment, a plurality of positive electrodes 100, negative electrodes 200, and separators 300 may be provided, respectively.

The positive electrode 100 and the negative electrode 200 may be stacked alternately along a first direction DR1. In this case, the positive electrode 100 and the negative electrode 200 stacked along the first direction DR1 may be stacked with the separator 300 interposed therebetween. Reference may be made to the configuration shown in Fig. 1 and diagrams to be described later, but the electrode assembly 10 according to the present disclosure is not necessarily limited to this configuration.

In this case, the first direction DR1 may refer to, for example, a direction in parallel with a Z-direction with reference to Fig. 1.

Also referring to Fig. 1, in the electrode assembly 10 having the above stacked state, the negative electrode 200 and the coating line 400 may come in contact.

In an embodiment, the coating line 400 may be formed on at least some of the plurality of separators 300. In this case, the coating line 400 may be formed along an edge of the separator 300 on at least one side of the separator 300 and may be in contact with the negative electrode 200. In such embodiments, the positive electrode 100 may not be in contact with the coating line 400. More detailed embodiments therefor will be described later.

It should be appreciated that the shape, size, color, thickness, shade, width, or the like of each component shown in Fig. 1 is arbitrarily shown for convenience of description and may be varied as necessary without departing from the matters defined in the present disclosure, without limiting the scope of the patent claims. This also applies to the drawings to be described below.

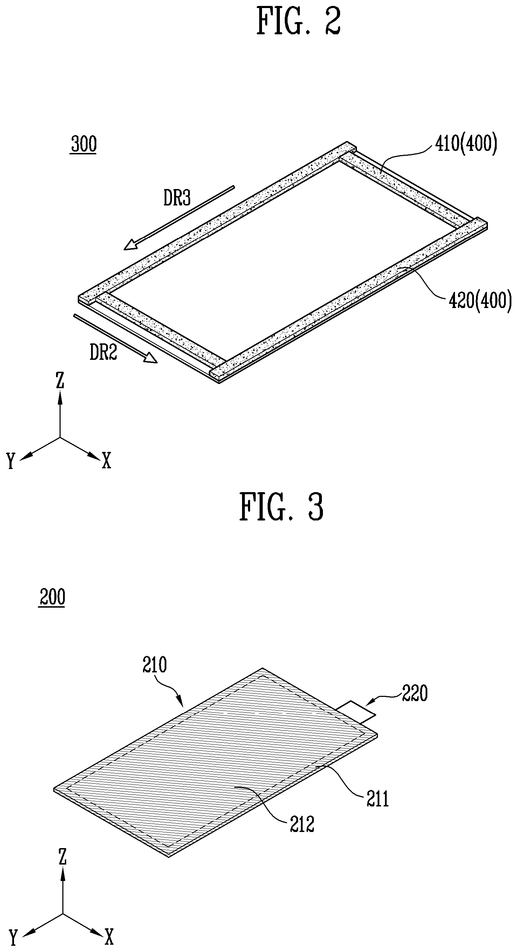

Fig. 2 is a diagram illustrating an example of the separator shown in Fig. 1.

In an embodiment, the separator 300 may include a material that prevents an electrical short between the positive electrode 100 and the negative electrode 200 and causes the flow of ions to occur. Depending on the embodiment, the separator 300 may have a thickness of 10 µm to 20 µm, but the present disclosure is not limited thereto.

In an embodiment, the separator 300 may include a porous polymer or a porous nonwoven fabric. The porous polymer may include a polyolefin-based polymer, such as an ethylene polymer, a propylene polymer, an ethylene/butene copolymer, an ethylene/hexene copolymer, and an ethylene/methacrylate copolymer. The porous nonwoven fabric may include high melting point glass fibers, polyethylene terephthalate fibers, or the like. The separator 300 may also include a ceramic-based material. For example, inorganic particles may be coated on the polymer or dispersed within the polymer to improve heat resistance.

The separator 300 may have a monolayer or bilayer structure including the polymer and/or nonwoven fabric described above.

Referring to Figs. 1 and 2, the separator 300 in such embodiments may have a sheet-like shape. The separator 300 having a sheet shape as described above may be arranged in the first direction DR1, i.e. perpendicular to the Z-direction with respect to those shown in Figs. 1 and 2.

Meanwhile, the separator 300 having a sheet-like shape as described above may have a pair of edges extending along a second direction DR2 intersecting the first direction DR1, and may also have a pair of edges extending along a third direction DR3 intersecting the first direction DR1. In this case, the second direction DR2 and third direction DR3 may refer to, for example, a direction parallel to the X-direction and the Y-direction, respectively, with reference to those shown in Figs. 1 and 2.

Referring again to Figs. 1 and 2, in an embodiment, the separator 300 may include a coating line 400 formed on at least one side of the separator 300 and provided along an edge of the separator 300. In this case, the edge may refer to, for example, a region adjacent to each edge (a pair of edges extending along the second direction DR2 and a pair of edges extending along the third direction DR3) based on those described above.

In this case, the coating line 400 may be formed along the edge but adjacent to the respective edges, and/or may be formed spaced apart from the respective edges. Alternatively, at least a portion of the coating line 400 may be formed to be adjacent to at least a portion of the respective edges, and a remaining portion may be spaced apart from the remaining portion of the respective edges.

Referring to Figs. 1 and 2, in an embodiment, the coating line 400 may be formed to have a predetermined thickness along the first direction DR1.

In an embodiment, the coating line 400 may have an insulating property.

In an embodiment, the coating line 400 may have an electrolyte swelling degree of 20% or less.

In an embodiment, the electrolyte swelling degree may satisfy the relationship defined by Equation 1 below.

$ER % = \left[\left({T}_{T}-{T}_{0}\right)/{T}_{0}\right] \times 100$ Equation 1

In Equation 1, ER represents an electrolyte swelling degree, T_{T} represents a thickness measured after immersing a specimen of the coating line (the size of the specimen is not particularly limited) in the electrolyte for 30 seconds or longer, and T₀ represents an initial thickness measured before immersing the specimen of the coating line in the electrolyte.

In a specific embodiment, the electrolyte swelling degree may be 17% or less, 15% or less, 12% or less, 10% or less, 7% or less, 5% or less, 3% or less, 2% or less, or 1% or less.

As described above, when the coating line 400 has insulating properties, lithium ion electrodeposition may be prevented during charging and discharging of the secondary battery including the electrode assembly 10, and dendrite formation may be avoided thereby. On the other hand, as described above, when the electrolyte swelling degree of the coating line 400 is less than the above numerical range, uneven electrodeposition of lithium ions as described above may be prevented more effectively in the electrode assembly manufactured, and dendrite formation may be prevented more effectively.

In such embodiments, the coating line 400 may essentially not undergo swelling in the electrolyte.

In an embodiment, the coating line 400 may have the adhesiveness.

In an embodiment, the coating line 400 may include at least one selected form the group consisting of polypropylene (PP), polyethylene (PE), polyethylene terephthalate (PET), polyimide (PI), polypropylene-polyethylene-polypropylene (PP/PE/PP) materials, polyvinylidene fluoride (PVdF), polyvinyl chloride (PVC), and polysulfone (PSU).

Fig. 3 is a diagram illustrating an example of the negative electrode shown in Fig. 1.

Referring to Fig. 3, in an embodiment, the negative electrode 200 may include a negative electrode coated portion 210 on which a negative electrode active material layer is formed on a negative electrode collector and a negative electrode uncoated portion 220 formed on an outer side of the negative electrode coated portion 210.

In an embodiment, the negative electrode 200 may include a negative electrode collector and a negative electrode active material. The negative electrode 200 may include a negative electrode collector and a negative electrode active material layer formed on at least one side of the negative electrode collector. The negative electrode collector may include a conductive material known in the art to the extent that it does not cause a chemical reaction within the lithium secondary battery. The negative electrode collector may include any one of, for example, stainless steel, nickel (Ni), aluminum (Al), titanium (Ti), copper (Cu), and alloys thereof, and may be provided in various forms, such as film, sheet, foil, or the like.

The negative electrode active material may include, for example, any one of lithium alloys, lithium metals, lithium-containing composites, or combinations thereof.

In an embodiment, the negative electrode 200 may include a lithium metal negative electrode. In other words, in an exemplary embodiment, the negative electrode 200 may include a negative electrode active material including a lithium metal, a lithium alloy, and/or a lithium-containing composite.

The lithium metal may be pure lithium metal or lithium metal with a protective layer formed thereon to inhibit dendrite growth, for example. In an embodiment, a lithium metal-containing layer deposited or coated on the negative electrode collector may be used as the negative electrode active material. In an embodiment, a lithium thin film layer may be used as the negative electrode active material.

In an embodiment, the negative electrode active material layer may be formed on both sides of the negative electrode collector. In the embodiment as described above, the negative electrode 200 may be fabricated by attaching a lithium thin film layer, for example, to both sides of the negative electrode collector.

Referring to Fig. 3, in an embodiment, the negative electrode 200 may include a negative electrode coated portion 210 on which a negative electrode active material layer is formed on the negative electrode collector and a negative electrode uncoated portion 220 formed on the outer side of the negative electrode coated portion 210. The negative electrode uncoated portion 220 may refer to a region where, unlike the negative electrode coated portion 210, no negative electrode active material layer is formed on the negative electrode collector, such that at least both sides of the negative electrode collector are exposed to the outside.

Referring to Fig. 1 and diagrams to be described together, in an embodiment, at least a portion of the negative electrode coated portion 210 may be in contact with the coating line 400.

In such an embodiment, the negative electrode 200 includes a negative electrode coated portion 210 on which a negative electrode active material layer is formed on the negative electrode collector and a negative electrode uncoated portion 220 formed on an outer side of the negative electrode coated portion 210, wherein the negative electrode coated portion 210 may include a first region 211 located along an edge of the negative electrode coated portion 210 and coming in contact with the coating line 400, and a second region 212 located on an inner side of the first region 211.

In an exemplary embodiment, the first region 211 may refer to a region in contact with the coating line 400 along the first direction DR1 in the negative electrode coated portion 210. On the other hand, as the coating line 400 may be formed along the edge of the separator 300, the first region 211 may be located along the edge of the negative electrode coated portion 210. In this case, at least a portion of the region including the edge of the negative electrode coated portion 210 may include the first region 211.

In an embodiment, the second region 212 may be a region located inward of the first region 211 and, in an exemplary embodiment, may refer to a region that is not in contact with the coating line 400. In an exemplary embodiment, the second region 212 may not be in contact with the coating line 400, but in contact with the separator 300 along the first direction DR1. When the coating line 400 is formed on the separator 300 in contact, then it may be brought into contact with at least a portion of the region on which the coating line 400 is not formed.

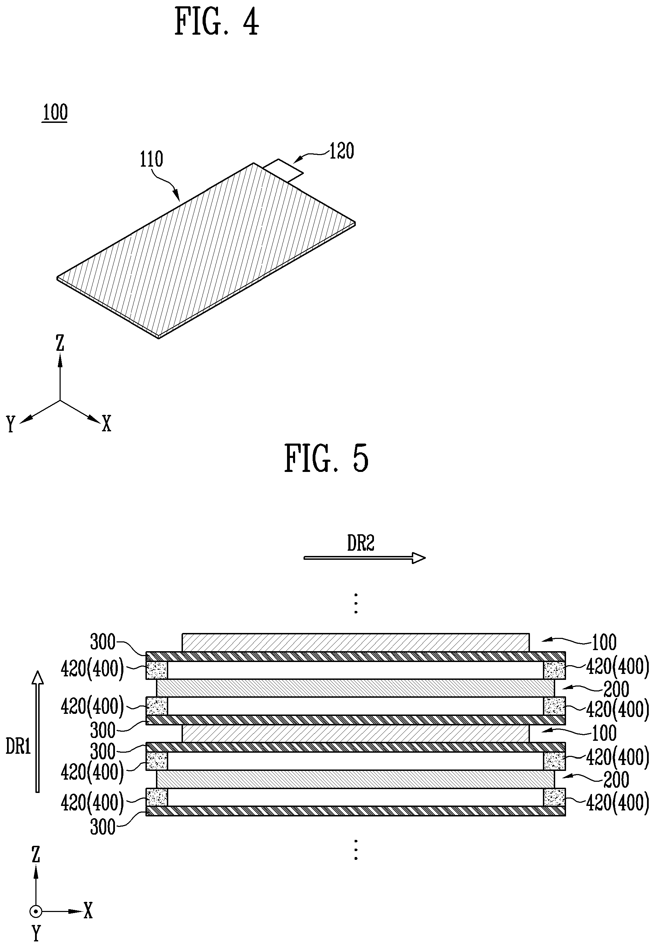

Fig. 4 is a diagram illustrating an example of the positive electrode shown in Fig. 1.

In an embodiment, the positive electrode 100 may include a positive electrode collector and a positive electrode active material. The positive electrode collector may include a conductive material known in the art to the extent that it does not cause a chemical reaction within the lithium secondary battery. The positive electrode collector may include, for example, any one of stainless steel, nickel (Ni), aluminum (Al), titanium (Ti), copper (Cu), and alloys thereof, and may be provided in various forms, such as film, sheet, foil, and the like. The positive electrode active material may include a material in which the lithium ions may be inserted and removed. The positive electrode active material may be, for example, a lithium metal oxide. The positive electrode active material may be applied to at least one surface of the positive electrode collector to form a positive electrode active material layer.

According to exemplary embodiments, the positive electrode active material may include a lithium-transition metal composite oxide. In a specific example, the positive electrode active material may include a lithium-nickel metal composite oxide. The lithium-nickel metal composite oxide may further include at least one of cobalt (Co), manganese (Mn), or aluminum (Al).

In some embodiments, the positive electrode active material or the lithium-nickel metal composite oxide may include a layered structure or a crystalline structure represented by Formula 1 below.

Chemical Formula 1 LiₓNiₐM_{b}O_{2+z}

In the Formula 1, each letter may be within the following ranges: 0.9≤x≤1.2, 0.6≤a≤0.99, 0.01≤b≤0.4, -0.5≤z≤0.1. As described above, M may include Co, Mn, and/or Al.

The chemical structure represented by Chemical Formula 1 is indicative of the bonding relationships included within the layered or crystalline structure of the positive electrode active material and is not intended to exclude other additional elements. For example, M may include Co and/or Mn, wherein Co and/or Mn may be provided as the main active element of the positive electrode active material together with Ni. The Chemical Formula 1 is provided to express the bonding relationships of the main active elements and should be understood to encompass the introduction and substitution of additional elements.

In an exemplary embodiment, the positive electrode active material or the lithium-nickel metal composite oxide may include a layered structure or a crystalline structure represented by Chemical Formula 1-1 below.

Chemical Formula 1-1 LiₓNiₐM1_{b1}M2_{b2}O_{2+z}

In the Chemical Formula 1-1, M1 may include Co, Mn, and/or Al. M2 may include any of the auxiliary elements described above. In the Chemical Formula 1-1, each letter may be within the following ranges: 0.9≤x≤1.2, 0.6≤a≤0.99, 0.01≤b1+b2≤0.4, -0.5≤z≤0.1.

In an embodiment, the positive electrode active material may include lithium metal oxide. Specifically, the positive electrode active material may include a lithium-nickel metal composite oxide as described above, a lithium iron phosphate (LFP)-based oxide represented by the Chemical Formula LiFePO₄, or a lithium cobalt (LCO)-based oxide represented by the Chemical Formula LiCoO₂.

In an embodiment, the positive electrode 100 may include a positive electrode coated portion 110 on which a positive electrode active material layer is formed on the positive electrode collector and a positive electrode uncoated portion 120 formed on an outer side of the positive electrode coated portion 110. Referring to Figs. 1 and 4, the positive electrode uncoated portion 120 may refer to a region where, unlike the positive electrode coated portion 110, a positive electrode active material layer is not formed on the positive electrode collector and at least both sides of the positive electrode collector are exposed to the outside. However, it is apparent that the shape and location of the positive electrode uncoated portion 120 is not directly limited to those shown in Figs. 1 and 4.

Referring again to Figs. 1 and 2, in an embodiment, the coating line 400 includes a first coating line 410 and a second coating line 420, wherein the first coating line 410 extends in a direction parallel to the second direction DR2, and the second coating line 420 extends in a direction parallel to the third direction DR3, wherein the second direction DR2 and third direction DR3 may intersect each other.

In an embodiment, the coating lines 400 formed on the separator 300 may include a first coating line 410 and a second coating line 420.

In an embodiment, the first coating line 410 and the second coating line 420 may have different extension directions. The term extension direction as used herein may refer to a direction in which the length of the first coating line 410 and the second coating line 420 increases.

In an embodiment, the first coating line 410 and the second coating line 420 may refer to a coated portion that extends in a particular direction. In such an embodiment, the first coating line 410 and the second coating line 420 may each have an independent length and width.

In an embodiment, the first coating line 410 may extend along a direction parallel to the second direction DR2, and the second coating line 420 may extend along a direction parallel to the third direction DR3. In this case, the direction parallel to the second direction DR2 may refer to a + second direction +DR2 and a - second direction -DR2. The direction parallel to the third direction DR3 may be a +third direction +DR3 and a -third direction -DR3.

In an embodiment, the first direction DR1 and the second direction DR2 may intersect each other, the first direction DR1 and the third direction DR3 may intersect each other, and the second direction DR2 and the third direction DR3 may intersect each other.

In an embodiment, the first direction DR1 and the second direction DR2 may form an angle that is essentially perpendicular to each other, the first direction DR1 and the third direction DR3 may form an angle that is essentially perpendicular to each other, and the second direction DR2 and the third direction DR3 may form an angle that is essentially perpendicular to each other.

As described above, the separator 300 may have a pair of edges extending along the second direction DR2 and a pair of edges extending along the third direction DR3. Accordingly, the first coating line 410 may be formed on a portion adjacent to at least one of the pair of edges among the edges of the separator 300 extending along the second direction DR2, and the second coating line 420 may be formed on a portion adjacent to at least one of the pair of edges extending along the third direction DR3 among the edges of the separator 300. In this case, the second direction DR2 and third direction DR3 may refer to, for example, directions parallel with the X-direction and the Y-direction, respectively, with reference to those shown in Figs. 1 and 2.

Referring again to Figs. 1 to 4, in an embodiment, the first coating line 410 may be formed in pairs spaced apart in the third direction DR3, and the second coating line 420 may be formed in pairs spaced apart in the second direction DR2.

In an embodiment, the first coating line 410 may be formed in pairs spaced apart in the third direction DR3.

In such an embodiment, the first coating line 410 may be formed on a portion adjacent to each of a pair of edges extending along the second direction DR2 among the edges of the separator 300.

In an embodiment, the second coating line 420 may be formed in pairs spaced apart in the second direction DR2.

In such an embodiment, the second coating line 420 may be formed on a portion adjacent to each of the pair of edges extending along the third direction DR3 among the edges of the separator 300.

In such an embodiment, the first coating line 410 may come in contact with the second coating line 420, formed in pairs, along the third direction DR3, respectively, and the second coating line 420 may come in contact with the first coating line 410, formed in pairs, along the second direction DR2, respectively.

Thus, by the first coating line 410 and the second coating line 420 formed as described above, the coating line 400 may be formed along the edge of the separator 300. Although not necessarily limited thereto, as the first coating line 410 formed in pairs spaced apart in the third direction DR3 and the second coating line 420 formed in pairs spaced apart in the second direction DR2 come in contact, respectively, as described above, the coating line 400 may be formed in a hollow square frame shape, such as a hollow parallelogram, rectangular or square frame shape, or the like.

Fig. 5 is a diagram to illustrate the state depicted in Fig. 1 in another aspect.

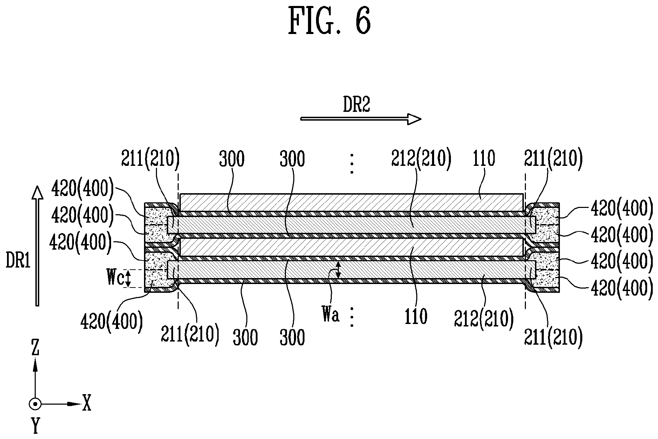

Fig. 6 is a diagram illustrating an exemplary cross-sectional view of an electrode assembly according to an embodiment of the present disclosure.

Fig. 5 is a diagram to illustrate a stacked state of the positive electrode 100, negative electrode 200, and separator 300 illustrated in Fig. 1 from another aspect, and more particularly, with reference to Fig. 1, may illustrate a cross-sectional view when a central portion of the electrode assemblies10 stacked on top of each other is cut in an XZ-plane. Note that the stacked case may refer to a state in which the positive electrode 100, negative electrode 200, and separator 300 are simply in contact to show displacement, rather than in a pressurized state after stacking.

The electrode assembly 10 in a pressurized state after stacking is illustrated in Fig. 6. When the positive electrode 100, negative electrode 200, and separator 300 arranged by stacking as shown in Figs. 1 and 5 are pressurized along the stacking direction, they may have the cross-sectional structure of the electrode assembly 10 as shown in Fig. 6.

Referring to Figs. 1, 5, and 6, in an embodiment, an area of the positive electrode 100 may be smaller than that of the negative electrode 200. In a specific embodiment, the area of the positive electrode coated portion 110 may be smaller than that of the negative electrode coated portion 210.

When the area of the positive electrode coated portion 110 is smaller than the area of the negative electrode coated portion 210, or in other words, when the area of the negative electrode coated portion 210 is greater than the area of the positive electrode coated portion 110, it may be more advantageous in terms of inhibiting dendrite formation on the surface of the negative electrode 200, and thus safety may be further improved.

In other words, the positive electrode 100, as in the aforementioned embodiment, may inlcude a positive electrode coated portion 110 in which a positive electrode active material layer is formed on the positive electrode collector and a positive electrode uncoated portion 120 formed on the outer side of the positive electrode coated portion 110, and the area of the positive electrode coated portion 110 may be smaller than the area of the negative electrode coated portion 120.

The area of the positive electrode 100 may be smaller than the area of the negative electrode 200, and more specifically, the area of the positive electrode coated portion 110 may be smaller than the area of the negative electrode coated portion 210. Accordingly, in the electrode assembly 10 having the stacked state as described with reference to Fig. 1, there may be a region in the negative electrode coated portion 210 that does not face the positive electrode coated portion 110 along the first direction DR1. During charging and discharging of a secondary battery including the electrode assembly 10, lithium ions may be more actively electrodeposited in the non-facing region, and dendrites may be more actively grown in the non-facing region.

In an exemplary embodiment, the non-facing region may be located on at least a portion of the edge of the negative electrode coated portion 210. In an even more exemplary embodiment, the non-facing region may be located across the entire edge of the negative electrode coated portion 210.

Referring to Figs. 5 and 6, in an embodiment, at least a portion of the first region 211 may be in contact with the coating line 400 along the first direction DR1.

On the other hand, as in the aforementioned embodiment, the first region 211, which is the region in contact with the coating line 400 on the negative electrode coated portion 210, may be located along an edge of the negative electrode coated portion 210.

In an exemplary embodiment, the first region 211 may be included in the non-facing region. In such an embodiment, at least a portion of the non-facing region of the negative electrode coated portion 210 may be in contact with the coating line 400. In specific embodiments, essentially all of the non-facing region in the negative electrode coated portion 210 may be in contact with the coating line 400.

In such an embodiment, essentially the second region 212 of the negative electrode coated portion 210 may face the positive electrode coated portion 110 along the first direction DR1 from the perspective of the positive electrode 100 and the negative electrode 200, and the first region 211 of the negative electrode coated portion 210 may not face the positive electrode coated portion 110 along the first direction DR1 and instead may come in contact with the coating line 400 along the first direction DR1. The first region 211 in contact with the coating line 400 may be covered in the first direction DR1 by the coating line 400.

Referring to Fig. 6 and the preceding diagrams together, in an embodiment, at least a portion of the first region 211 may be in contact with the coating line 400 along a second direction DR2 or a third direction DR3.

While Fig. 6 illustrates only a state in which at least a portion of the first region 211 comes in contact with the coating line 400 along the second direction DR2, this is by way of illustration with a cross-sectional view only, and at least a portion of the first region 211 may come in contact with the coating line 400 along the third direction DR3 in the same manner as illustrated in Fig. 6.

Referring to the foregoing embodiments together, at least a portion of the first region 211 may be in contact with the second coating line 420 along the second direction DR2. Meanwhile, at least a portion of the first region 211 may be in contact with the first coating line 410 along the third direction DR3.

In an embodiment, the first coating line 410 may be in contact with the first region 211 in the first direction DR1 and the third direction DR3, and the second coating line 420 may be in contact with the first region 211 in the first direction DR1 and the second direction DR2.

According to an embodiment by which the first coating line 410 and the second coating line 420 are formed, it is as described above that the coating line 400 formed along the edge of the separator 300 may be formed in the shape of a hollow square picture frame. Meanwhile, as the first coating line 410 is in contact with the first region 211 in the first direction DR1 and the third direction DR3, and as the second coating line 420 is in contact with the first region 211 in the first direction DR1 and the second direction DR2, consequently, the negative electrode coated portion 210 may be covered by the coating line 400 along its edge.

Referring again to Fig. 6, in an embodiment, a thickness Wc of the coating line 400 may be greater than or equal to a thickness Wa of the negative electrode coated portion 210.

The thicknesses Wc, Wa may refer to the lengths of the coating line 400 and negative electrode coated portion 210 along the first direction DR1.

In an embodiment, as the thickness Wc of the coating line 400 is greater than or equal to the thickness Wa of the negative electrode coated portion 210, the coating line 400 may easily cover along edge of the negative electrode coated portion 210 in the first direction DR1 and the second direction DR2, or in the first direction DR1 and the third direction DR3, as described above.

Referring again to Figs. 1, 5 and 6, in an embodiment, when the electrode assembly 10 for a secondary battery is viewed orthogonally in an imaginary plane perpendicular to the first direction DR1, the first region 211 and the positive electrode coated portion 110 may not overlap each other.

With respect to Figs. 1, 5 and 6, the imaginary plane perpendicular to the first direction DR1 may refer to any plane parallel to the XY plane.

In an exemplary embodiment, when the electrode assembly 10 is viewed orthogonally to the imaginary plane perpendicular to the first direction DR1, the first region 211 and the positive electrode coated portion 110 may be spaced apart from each other at least partially.

In another exemplary embodiment, when the electrode assembly 10 is viewed orthogonally on an imaginary plane perpendicular to the first direction DR1, the inner periphery of the first region 211 and the periphery of the positive electrode coated portion 110 may be spaced apart. Alternatively, in another exemplary embodiment, at an orthogonal view, the inner periphery of the first region 211 and the periphery of the positive electrode coated portion 110 may be in contact with each other as described above. In such an embodiment, the inner periphery of the first region 211 and the periphery of the positive electrode coated portion 110 may be equal to each other at orthogonal view, as described above.

In an embodiment, the electrode assembly 10 for a secondary battery may satisfy the following Equation 1.

$1 < A 2 / Ac \leq 1.2$ Equation 1

In the Equation 1, A2 represents an area of the second region 212, and Ac represents an area of the positive electrode coated portion 110.

In an exemplary embodiment, the area may refer to an area observed relative to a plane parallel to the XY-plane relative to those shown in Figs. 1, 5, and 6.

In exemplary embodiments, the A2 may be essentially the same as Ac.

In the embodiment as described above, the positive electrode 100, negative electrode 200, and separator 300 may be arranged such that the coating line 400, which has insulating properties and/or an electrolyte swelling degree below the numerical range, comes in contact with the first region 211 of the negative electrode coated portion 210 in the same manner as described above. Accordingly, during charging and discharging of the secondary battery including the electrode assembly 10, excessive electrodeposition of lithium ions in the region not facing the positive electrode coated portion 110 along the first direction DR1 of the negative electrode coated portion 210 may be prevented, thereby effectively preventing excessive formation of dendrites in the region. Accordingly, the safety and cell performance of a secondary battery including the electrode assembly 10 may be effectively improved.

In an embodiment, the first coating line 410 may come in contact with at least a portion of the negative electrode coated portion 210 and the negative electrode uncoated portion 220. In other words, at least a portion of the first coating line 410 may come in contact with the negative electrode coated portion 210 along the first direction DR1 and the third direction DR3, and the remaining portion may come in contact with the negative electrode uncoated portion 220 along the first direction DR1.

However, unlike those shown in Figs. 1 to 6, the negative electrode uncoated portion may be formed on the outer side of the negative electrode coated portion, but may be formed along two parallel edges. For example, in the case of the negative electrode 200 shown in Fig. 3, the negative electrode uncoated portion 220 is formed only on one of the two end edges parallel to the X-direction, but an embodiment in which the negative electrode uncoated portion is formed on both end edges may be contemplated.

In an embodiment, the second coating line 420 may come in contact with the negative electrode coated portion 210 along the first direction DR1 and second direction DR2. In a specific embodiment, the second coating line 420 may only come in contact with the negative electrode coated portion 210 along the first direction DR1 and second direction DR2, and may not be in contact with the negative electrode uncoated portion.

Referring again to Figs. 1 to 4, in an embodiment, when the electrode assembly 10 for a secondary battery is viewed orthogonally on an imaginary plane perpendicular to the first direction DR1, the first coating line 410 and the positive electrode uncoated portion 120 may overlap each other. On the other hand, the above description on the imaginary plane may still apply.

As described above, during charging and discharging of the secondary battery including the electrode assembly 10, it is possible to prevent excessive electrodeposition of lithium ions in a region of the negative electrode coated portion 210 that does not face the positive electrode coated portion 110 along the first direction DR1, thereby effectively preventing excessive formation of dendrites in the region. Accordingly, the safety and battery performance of the secondary battery including the electrode assembly 10 may be effectively improved.

On the other hand, when the coating line 400 having the adhesiveness is formed as in the above-described embodiment, such as in the configuration of the first coating line 410 and second coating line 420, it is possible to further improve the structural stability of the electrode assembly 10 along the first direction DR1.

Referring again to Figs. 1 to 5, in an embodiment, the area of the negative electrode coated portion 210 may be smaller than the area of the separator 300.

As in the aforementioned embodiments, the area of the negative electrode coated portion 210 may be greater than the area of the positive electrode coated portion 110.

In such embodiments, the area of the negative electrode coated portion 210 may be smaller than the area of the separator 300.

Thus, as described above, the structural stability of the electrode assembly 10 including the positive electrode 100, the negative electrode 200, and the separator 300 may be further improved, and the electrodeposition characteristics may be improved during charging and discharging of the secondary battery including the electrode assembly 10 to effectively prevent dendrite formation, while effectively blocking electrical shorting in the positive electrode 100 and the negative electrode 200.

Referring again to Figs. 1, 5, and 6, in an embodiment, in the electrode assembly 10, the separators 300 on which the coating line 400 is formed may be arranged successively along the first direction DR1.

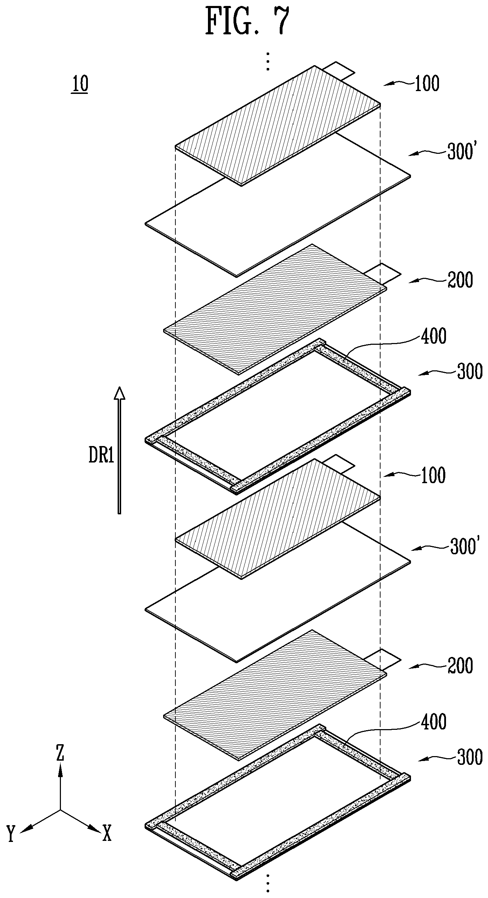

As described above, at least some of the plurality of separators 300 may have the coating line 400 formed along an edge on at least one side. In such an embodiment, the plurality of separators 300 may be separated into a separator 300 with the coating line 400 formed, and a separator 300' (see Figs. 7 to 9) with no coating line 400 formed.

In such an embodiment, the separators 300 with the coating lines 400 formed may be arranged successively along the first direction DR1. In an exemplary embodiment, the electrode assembly 10 may have the coating line 400 formed on all of the separators 300 except for the separators located at each end along the first direction DR1.

Referring now to Figs. 1 and 5, in an embodiment, the separators 300 adjacent to each other along the first direction DR1 may be arranged so that a surface on which the coating line 400 is formed faces the negative electrode 200. In an embodiment in which the positive electrode 100 and the negative electrode 200 are arranged alternately along the first direction DR1, when the separators 300 are arranged in the above manner, the coating lines 400 formed on the separators 300 may only come in contact with the negative electrode 200. In this case, the coating line 400 may not be present on the surface of the separator 300 in contact with the positive electrode 100.

Referring to Fig. 6, in an embodiment, the coating line 400 formed on one of the separators 300 may be in contact along the first direction DR1 with the coating line 400 formed on the other separator 300 facing the negative electrode 200 in contact with the separator 300.

By such a structure, the negative electrode 200 may be covered from the outside by the coating lines 400 in the second direction DR2 or third direction DR3 of the negative electrode 200.

On the other hand, the coating lines 400 may not be present on a surface of the separator 300 in contact with the positive electrode 100, but the region where the coating lines 400 are formed may be bent by pressing along the first direction DR1, and by such bending, the positive electrode 100 may also be covered from the outside by the bent portion of the separator 300 from the outside of the second direction DR2 or third direction DR3, as shown in Fig. 6.

Fig. 7 is a diagram to illustrate a state in which the positive electrode, negative electrode, and separator are stacked in an electrode assembly according to another embodiment of the present disclosure.

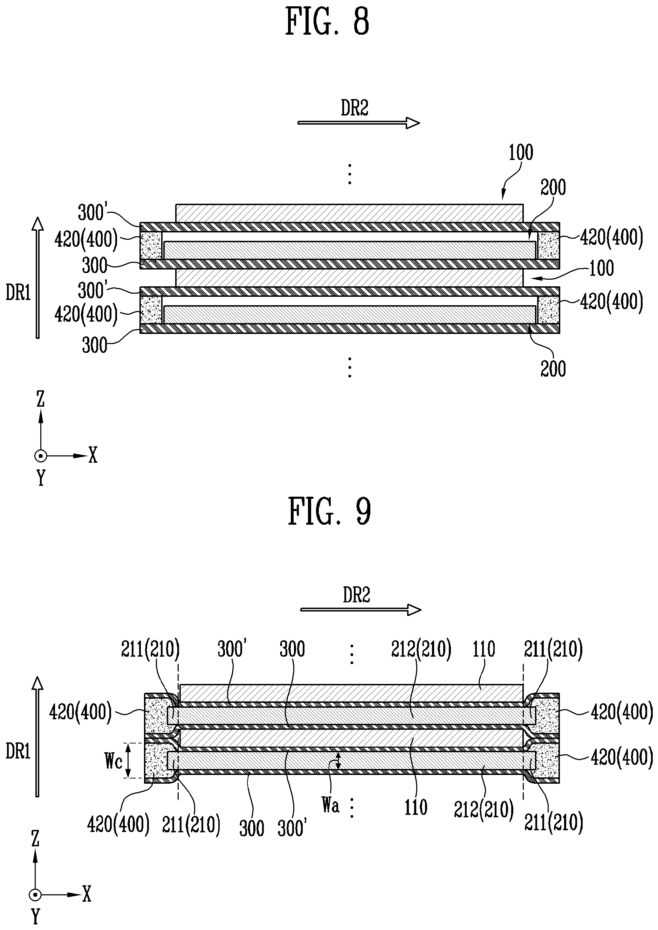

Fig. 8 is a diagram to illustrate the state depicted in Fig. 7 in another aspect.

Fig. 9 is a diagram illustrating an exemplary cross-sectional view of an electrode assembly according to another embodiment of the present disclosure.

Fig. 8 is a diagram to illustrate the stacked state of the positive electrode 100, negative electrode 200, and separators 300, 300' shown in Fig. 7 in another aspect, and more particularly, with reference to Fig. 7, may illustrate a cross-sectional view when a central portion of the electrode assembly 10, which are stacked on top of each other, is cut in an XZ-plane. Note that the stacked state may refer to a state in which the positive electrode 100, negative electrode 200, and separators 300, 300' are simply arranged in contact with each other, rather than in a pressurized state after stacking.

An electrode assembly 10 in a pressurized state after stacking is shown in Fig. 9. When the positive electrode 100, negative electrode 200, and separator 300, 300' stacked as shown in Figs. 7 and 8 are pressed along the stacking direction, they may have the cross-sectional structure of the electrode assembly 10 shown in Fig. 9.

Referring to Figs. 7 to 9, in another embodiment of the present disclosure, the electrode assembly 10 may have a separator 300 with the coating line 400 formed and a separator 300' without the coating line 400 formed, alternately arranged along the first direction DR1.

The separator 300' with no coating line 400 formed may differ from the separator 300 with the coating line 400 formed only in the presence or absence of the coating line 400, and the above description of the separator 300 may still apply, including other materials, shapes, or the like.

In such an embodiment, the separator 300 with the coating line 400 formed may be in contact with the negative electrode 200 on the surface on which the coating line 400 is formed, and may be in contact with the positive electrode 100 on the surface on which the coating line 400 is not formed.

Referring to Fig. 9, in such an embodiment, the thickness Wc of the coating line 400 may be greater than the thickness Wa of the negative electrode coated portion 210.

The thicknesses Wc, Wa may refer to the lengths of the coating line 400 and negative electrode coated portion 210 along the first direction DR1.

In such an embodiment, when the thickness Wc of the coating line 400 is greater than the thickness Wa of the negative electrode coated portion, the coating line 400 may easily cover along the edge of the negative electrode coated portion 210 in the first direction DR1 and the second direction DR2, or the first direction DR1 and the third direction DR3, as described above.

Referring again to Fig. 9, in an embodiment, the coating line 400 formed on one of the separators 300 may come in contact along the first direction DR1 with another the separator 300' that faces the negative electrode 200 in contact with the separator 300.

The electrode assembly 10 in such an embodiment may be structurally substantially the same as the electrode assembly 10 of the embodiment shown in Fig. 6. However, when the electrode assembly 10 of the embodiment shown in Fig. 6 is disassembled, for example, when disassembling the two separators that are in contact on both sides of either negative electrode, the coating line 400 is formed on each of the two disassembled separators 300, whereas when the electrode assembly 10 of the embodiment shown in Fig. 9 is equally disassembled, the coating line 400 is formed on one of the disassembled separators 300, and the coating line 400 is not formed on the other separator 300'.

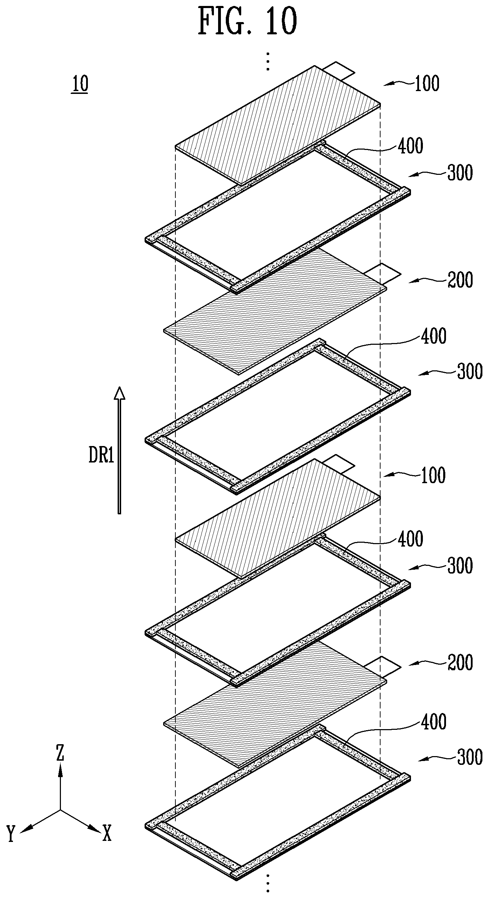

Fig. 10 is a diagram to illustrate a state in which a positive electrode, a negative electrode, and a separator are stacked in an electrode assembly according to another embodiment of the present disclosure.

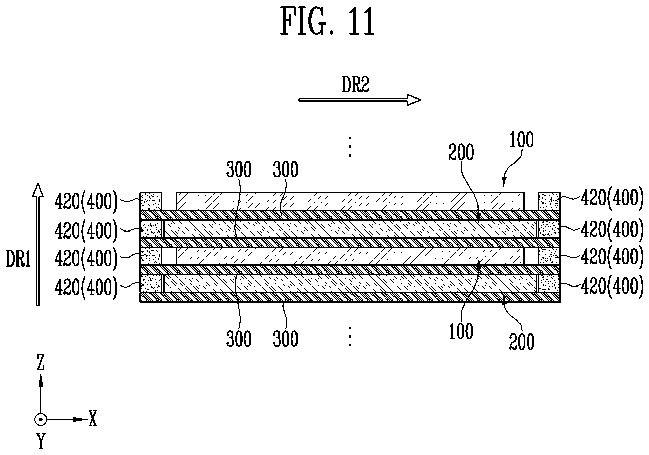

Fig. 11 is a diagram to illustrate the state depicted in Fig. 10 in another aspect.

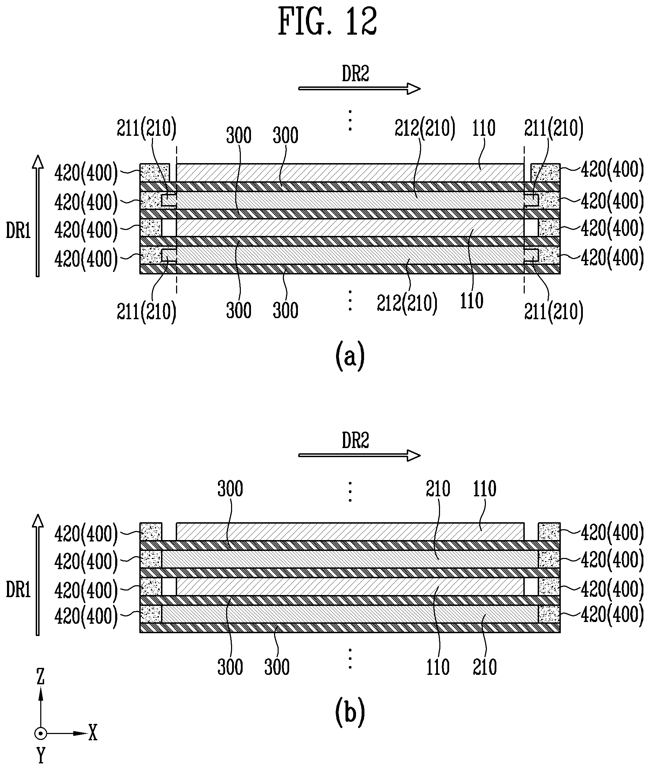

Fig. 12 is a diagram illustrating exemplary cross-sectional views of an electrode assembly according to another embodiment of the present disclosure.

Fig. 11 is a diagram to illustrate a stacked state of the positive electrode 100, negative electrode 200, and separator 300 disclosed in Fig. 10 in another aspect, and more specifically, with reference to Fig. 10, it may illustrate a cross-sectional view of a state in which the central portion of the electrode assembly 10 that are stacked on top of each other is cut in the XZ plane. Note that the stacked state may refer to a state in which the positive electrode 100, negative electrode 200, and separator 300 are simply in contact, rather than in a pressurized state after stacking.

The electrode assembly 10 in the pressurized state after stacking is shown in Fig. 12. When the positive electrode 100, negative electrode 200, and separator 300 arranged by stacking as shown in Figs. 10 and 11 are pressed along the stacking direction, they may have the cross-sectional structure of the electrode assembly 10 shown in Fig. 12A, or they may have the cross-sectional structure of the electrode assembly 10 shown in Fig. 12B.

Unlike the embodiments described with reference to Figs. 1, 5, and 6, in another embodiment of the present disclosure, referring to Figs. 10 to 12, the electrode assembly 10 may be arranged such that the separators 300 on which the coating lines 400 are formed are arranged continuously along the first direction DR1, but the separators 300 adjacent to each other along the first direction DR1 may be arranged such that the surfaces on which the coating lines 400 are formed face in the same direction with respect to the first direction DR1.

In an embodiment in which the positive electrode 100 and the negative electrode 200 are arranged alternately along the first direction DR1, when the separators 300 are arranged in the same manner as described above, the coating lines 400 may be present on the surface of the separators 300 in contact with the negative electrode 200 as well as on the surface of the separators 300 in contact with the positive electrode 100. In this case, the positive electrode 100 may or may not be in contact with the coating line 400.

Referring to Fig. 12A, the negative electrode 200 may be covered from the outside by the coating lines 400 on the outside in the second direction DR2 or the third direction DR3 of the negative electrode 200, and the positive electrode 100 may also be covered from the outside by the coating lines 400 on the outside in the second direction DR2 or the third direction DR3 of the positive electrode 100.

Meanwhile, the negative electrode coated portion 210, specifically at least a portion of the first region 211, may be in contact with the coating lines 400 along the first direction DR1. In this case, the description of the state of contact and cover of the first region 211 with the coating line 400 may be applied as described above with reference to Figs. 1 to 9.

Referring to Fig. 12B, only a small portion of the first region 211 may be in contact with the coating line 400 along the first direction DR1, or the coating line 400 may not be in contact with the first region 211 along the first direction DR1.

Referring to Fig. 12A and 12B, the coating line 400 formed on one of the separators 300 may be in contact along the first direction DR1 with the other one of the separators 300 that faces the positive electrode 100 or the negative electrode 200 in contact with the surface on which the coating line 400 is formed.

Referring now to Figs. 1 and 2, the positive electrode 100 and negative electrode 200 may be arranged such that their uncoated portions protrude in the same direction but are formed at different positions; however, the present disclosure is not necessarily limited thereto, and the positive electrode 100 and negative electrode 200 may be arranged such that their uncoated portions protrude in different directions, for instance, protruding toward opposite sides, as needed.

In an embodiment, it may further include a positive electrode lead electrically coupled to at least one of the uncoated portions of the positive electrode 100, and a negative electrode lead electrically coupled to at least one of uncoated portions of the negative electrode 200. The positive electrode lead may be welded to at least one of the uncoated portions of the positive electrode 100, and may extend in the same direction as the protruding direction of the uncoated portions of the positive electrode 100. Meanwhile, the negative electrode lead may be welded to at least one of the uncoated portions of the negative electrode 200, and may extend in the same direction as the protruding direction of the uncoated portions of the negative electrode 200.

In an embodiment, 2 to 60 positive electrodes 100 in the electrode assembly 10 may be included, and 2 to 60 negative electrodes 200 may be included. In such embodiments, 4 to 120 separators 300 may be present, but is not necessarily limited thereto.

In an embodiment, it may further include a second separator (not shown) located in at least one of the two ends along the first direction DR1. The second separator (not shown) may have the same material, shape and form as the separator 300, but unlike the separator 300, the coating line 400 may not be formed.

A secondary battery according to an aspect of the present disclosure may include an electrode assembly 10 according to an aspect of the present disclosure.

In a specific embodiment, the secondary battery may include another electrode assembly 10 in accordance with an aspect of the present disclosure; an exterior member accommodating the electrode assembly 10; and an electrolyte accommodated within the exterior member with the electrode assembly 10.

In an embodiment, the exterior member may include an accommodating space therein, and may be configured to isolate objects accommodated in the accommodating space from the outside. The electrode assembly 10 may be accommodated and sealed in the accommodating space of the exterior member.

The exterior member may be used with appropriate selection as needed, such as pouch-type exterior member, can-type exterior member, coin-type exterior member, or the like.

In an embodiment, the electrolyte may be accommodated with the electrode assembly 10 within the exterior member. Specifically, the electrolyte may be accommodated with the electrode assembly 10 within the accommodating space of the exterior member, and may be in contact with at least a portion of the electrode assembly 10 within the accommodating space.

In an embodiment, the electrolyte may provide a migration pathway for ions.

According to exemplary embodiments, a non-aqueous electrolyte may be used as the electrolyte.

The non-aqueous electrolyte includes a lithium salt and an organic solvent, wherein the lithium salt may be represented, for example, as Li⁺X⁻, and examples of anions of the lithium salt (X⁻) may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, (CF₃SO₂)₂N⁻, (FSO₂)₂N-, CF₃CF₂(CF₃)₂O⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻ or the like.

The organic solvent may include an organic compound that has sufficient solubility in the lithium salt and additive, with no reactivity within the cell. The organic solvent may include, for example, at least one of a carbonate solvent, an ester solvent, an ether solvent, a ketone solvent, an alcoholic solvent, and an aprotic solvent.

The non-aqueous electrolyte may further include an additive. The additive may include, for example, a cyclic carbonate-based compound, a fluorine-substituted carbonate-based compound, a sultone-based compound, a cyclic sulfate-based compound, a cyclic sulfite-based compound, a phosphate-based compound, and a borate-based compound.

The electrode assemblies prepared in accordance with an aspect of the present disclosure may be preferably used in battery cells used as a power source of small devices, as well as in battery modules and/or unit cells of battery packs in medium to large devices including a plurality of battery cells. Examples of such small devices include, but are not limited to, cell phones, notebook computers, cameras, or the like, and examples of such medium to large devices include, but are not limited to, electric vehicles, hybrid electric vehicles, plug-in hybrid electric vehicles, power storage systems, or the like.

It is understood by those skilled in the art that the plurality of exemplary embodiments described above are specific examples of the following aspects.

Aspect 1: An electrode assembly for a secondary battery, comprising: one or more positive electrodes; one or more negative electrodes; a plurality of separators; and a coating line formed along an edge on at least one side of at least some of the plurality of separators, wherein the positive electrode and the negative electrode are alternately stacked along a first direction, wherein any one of the plurality of separators is interposed between the positive electrode and the negative electrode, and wherein the negative electrode and the coating line come in contact.

Aspect 2: The electrode assembly according to Aspect 1, wherein (a) the coating line has an insulating property, and/or (b) the coating line has an electrolyte swelling degree of 20% or less, and/or (c) the coating line has the adhesiveness, and/or (d) the coating line includes at least any one selected from the group consisting of polypropylene, polyethylene, polyethylene terephthalate, polyimide, polypropylene-polyethylene-polypropylene (PP/PE/PP) materials, polyvinylidene fluoride (PVdF), polyvinyl chloride (PVC), and polysulfone (PSU).

Aspect 3: The electrode assembly according to Aspect 1 or 2, wherein the negative electrode includes a lithium metal negative electrode.

Aspect 4: The electrode assembly according to any one of Aspects 1 to 3, wherein the negative electrode includes a negative electrode coated portion on which a negative electrode active material layer is formed on a negative electrode collector and a negative electrode uncoated portion formed on an outer side of the negative electrode coated portion, and wherein the negative electrode coated portion includes a first region located along an edge of the negative electrode coated portion and coming in contact with the coating line and a second region located on an inner side of the first region.

Aspect 5: The electrode assembly according to Aspect 4, wherein the positive electrode includes a positive electrode coated portion on which a positive electrode active material layer is formed on a positive electrode collector and a positive electrode uncoated portion formed on an outer side of the positive electrode coated portion, and wherein an area of the positive electrode coated portion is smaller than an area of the negative electrode coated portion.

Aspect 6: The electrode assembly according to any one of Aspects 1 to 5, wherein the coating line includes a first coating line and a second coating line, wherein the first coating line extends in a direction parallel to a second direction, preferably, the first coating line is formed in pairs spaced apart in a third direction, wherein the second coating line extends in a direction parallel to the third direction, preferably, the second coating lines is formed in pairs spaced apart in the second direction, and wherein the second direction and third direction intersect each other.

Aspect 7: The electrode assembly according to any one of Aspects 1 to 6, wherein (a) at least a portion of the first region is in contact with the coating line along the first direction, and/or (b) at least a portion of the first region is in contact with the coating line along a second direction or a third direction.

Aspect 8: The electrode assembly according to any one of Aspects 1 to 7, wherein a thickness of the coating line is greater than or equal to a thickness of the negative electrode coated portion.

Aspect 9: The electrode assembly according to any one of Aspects 1 to 8, wherein, when the electrode assembly for a secondary battery is viewed orthogonally in an imaginary plane perpendicular to the first direction, the first region and the positive electrode coated portion do not overlap each other.

Aspect 10: The electrode assembly according to any one of Aspects 1 to 9, wherein the electrode assembly for a secondary battery satisfies Equation 1 below:

$1 < A 2 / Ac \leq 1.2$ Equation 1
wherein, in the Equation 1, A2 represents an area of the second region, and Ac represents an area of the positive electrode coated portion.

Aspect 11: The electrode assembly according to any one of Aspects 1 to 10, wherein, in the electrode assembly, separators on which the coating line is formed are arranged successively along the first direction.

Aspect 12: The electrode assembly according to Aspect 11, wherein the separators that are adjacent to each other along the first direction are arranged so that a surface on which the coating line is formed faces the negative electrode.

Aspect 13: The electrode assembly according to any one of Aspects 1 to 12, wherein, in the electrode assembly, a separator with the coating line formed and a separator with no coating line formed are arranged alternately along the first direction.

Aspect 14: The electrode assembly according to any one of Aspects 1 to 13, wherein an area of the negative electrode coated portion is smaller than an area of the separator.

Aspect 15: A secondary battery comprising: the electrode assembly for a secondary battery according to any one of Aspects 1 to 14; an exterior member accommodating the electrode assembly for a secondary battery; and an electrolyte accommodated with the electrode assembly within the exterior member.

The above described are merely examples of applying the principles of the present disclosure, and other configurations may be included without departing from the scope of the present disclosure.

## Claims

1. An electrode assembly for a secondary battery, comprising:
one or more positive electrodes;
one or more negative electrodes;
a plurality of separators; and
a coating line formed along an edge on at least one side of at least some of the plurality of separators,
wherein the positive electrode and the negative electrode are alternately stacked along a first direction,
wherein any one of the plurality of separators is interposed between the positive electrode and the negative electrode, and
wherein the negative electrode and the coating line come in contact.

2. The electrode assembly according to claim 1, wherein (a) the coating line has an insulating property, and/or (b) the coating line has an electrolyte swelling degree of 20% or less, and/or (c) the coating line has the adhesiveness, and/or (d) the coating line includes at least any one selected from the group consisting of polypropylene, polyethylene, polyethylene terephthalate, polyimide, polypropylene-polyethylene-polypropylene (PP/PE/PP) materials, polyvinylidene fluoride (PVdF), polyvinyl chloride (PVC), and polysulfone (PSU).

3. The electrode assembly according to claim 1 or 2, wherein the negative electrode includes a lithium metal negative electrode.

4. The electrode assembly according to any one of claims 1 to 3, wherein the negative electrode includes a negative electrode coated portion on which a negative electrode active material layer is formed on a negative electrode collector and a negative electrode uncoated portion formed on an outer side of the negative electrode coated portion, and
wherein the negative electrode coated portion includes a first region located along an edge of the negative electrode coated portion and coming in contact with the coating line and a second region located on an inner side of the first region.

5. The electrode assembly according to claim 4, wherein the positive electrode includes a positive electrode coated portion on which a positive electrode active material layer is formed on a positive electrode collector and a positive electrode uncoated portion formed on an outer side of the positive electrode coated portion, and
wherein an area of the positive electrode coated portion is smaller than an area of the negative electrode coated portion.

6. The electrode assembly according to any one of claims 1 to 5, wherein the coating line includes a first coating line and a second coating line,
wherein the first coating line extends in a direction parallel to a second direction, preferably, the first coating line is formed in pairs spaced apart in a third direction,
wherein the second coating line extends in a direction parallel to the third direction, preferably, the second coating lines is formed in pairs spaced apart in the second direction, and
wherein the second direction and third direction intersect each other.

7. The electrode assembly according to any one of claims 1 to 6, wherein (a) at least a portion of the first region is in contact with the coating line along the first direction, and/or (b) at least a portion of the first region is in contact with the coating line along a second direction or a third direction.

8. The electrode assembly according to any one of claims 1 to 7, wherein a thickness of the coating line is greater than or equal to a thickness of the negative electrode coated portion.

9. The electrode assembly according to any one of claims 1 to 8, wherein, when the electrode assembly for a secondary battery is viewed orthogonally in an imaginary plane perpendicular to the first direction, the first region and the positive electrode coated portion do not overlap each other.

10. The electrode assembly according to any one of claims 1 to 9, wherein the electrode assembly for a secondary battery satisfies Equation 1 below: $1 < A 2 / Ac \leq 1.2$ Equation 1 wherein, in the Equation 1, A2 represents an area of the second region, and Ac represents an area of the positive electrode coated portion.

11. The electrode assembly according to any one of claims 1 to 10, wherein, in the electrode assembly, separators on which the coating line is formed are arranged successively along the first direction.

12. The electrode assembly according to claim 11, wherein the separators that are adjacent to each other along the first direction are arranged so that a surface on which the coating line is formed faces the negative electrode.

13. The electrode assembly according to any one of claims 1 to 12, wherein, in the electrode assembly, a separator with the coating line formed and a separator with no coating line formed are arranged alternately along the first direction.

14. The electrode assembly according to any one of claims 1 to 13, wherein an area of the negative electrode coated portion is smaller than an area of the separator.

15. A secondary battery comprising:
the electrode assembly for a secondary battery according to any one of claims 1 to 14;
an exterior member accommodating the electrode assembly for a secondary battery; and
an electrolyte accommodated with the electrode assembly within the exterior member.
